# EUROPEAN PATENT APPLICATION

(11) **EP 4 703 630 A1**
(43) Date of publication of application: **04.03.2026**
(21) Application number: 24796090.9
(22) Date of filing: 24.04.2024
(51) Int. Cl.: F21S 43/00, F21S 43/241, B60Q 3/74

(54) **OPTICAL DECORATIVE PART OF VEHICLE**

(30) Priority: 26.04.2023 CN 202310469880
(71) Applicant: Yanfeng International Automotive Technology Co., Ltd., Shanghai 201306 (CN)
(72) Inventor: YOU, Guoyan, Shanghai 201315 (CN); SHEN, Shouchen, Shanghai 201315 (CN)
(74) Representative: Meissner Bolte Partnerschaft mbB
(86) International application number: PCT/CN2024/089443
(87) International publication number: WO 2024/222711

(57) **Abstract**

The present invention relates to an optical trim of a vehicle. The optical trim comprises a plurality of light sources, and a plurality of layers of light guide assemblies which are longitudinally stacked, wherein the light sources are side-lit, and the light guide assemblies form independent display modules by receiving light from the plurality of the light sources that are not interfered with each other and refracting the light, and emergent light of the display modules is combined to create different light emission effects at an upper light output surface. According to the optical trim of a vehicle of the present invention, a multi-dimensionally superposed dynamic effect of a surface light source is realized at a low cost by means of a longitudinal superposition of the plurality of layers of the light guide assemblies.

## Description

### FIELD

The present invention relates to vehicles, and in particular to a vehicle optical trim.

### BACKGROUND

In the field of dynamic ambient light, in the prior art, a surface light source can only create a static effect, and cannot create a dynamic effect. Therefore, the effect created by a surface light source ambient light is monotonous. The dynamic effect of a surface light source ambient light is achieved by matrix LEDs. Since the illumination area of a LED is limited, the dynamic effect can only be achieved through massive LEDs in the case of a large area, so that the cost is extremely high, and the heat dissipation system of the model is inadequate in general.

### SUMMARY

In order to solve the problems of extremely high cost and the like in the prior art, the first aspect of the present disclosure provides a vehicle optical trim.

According to the vehicle optical trim of the present disclosure, the vehicle optical trim comprises a plurality of light sources and a plurality of layers of light guide assemblies longitudinally stacked, wherein the light sources are side-lit, the light guide assemblies form independent display modules by receiving light from the plurality of the light sources that do not interfere with each other and refracting the light, and emergent light of the display modules is combined to create different light emission effects at an upper light output surface.

Preferably, each layer of the light guide assemblies comprises a light guide member and a light isolation reflective layer; wherein the light isolation reflective layer is located below the light guide member; and wherein light from the light sources enters the light guide members and is refracted by the light guide members, and light in the adjacent layers of the light guide assemblies is separated by the light isolation reflective layer, so that the light in each layer of the light guide assemblies is transmitted independently.

Preferably, the outer edge of the light guide member in a lower layer extends at least partially beyond the light guide assembly in a previous layer.

Preferably, the light guide member and the light isolation reflective layer are independent from each other, or the light isolation reflective layer is integrated on the light guide member.

Preferably, each layer of the light guide assemblies further comprises a side light isolation layer, and the side light isolation layer is located on an outer side of the light guide member.

Preferably, the height of the side light isolation layer is substantially equal to the height of the light guide member.

Preferably, a reflective structure is provided at the bottom of each layer of the light guide members.

Preferably, the light guide assembly on one plane comprises a plurality of transverse modules independently controlled.

Preferably, the vehicle optical trim further comprises a light source support, and the light source support is adapted to separate light incident on each layer of the light guide assemblies.

Preferably, a plurality of light-transmitting holes is configured on the light source support, and each of the light-transmitting holes corresponds to a light source of each layer of light guide assemblies.

Preferably, the vehicle optical trim further comprises a composite light incident module located between the light source support and the light guide assemblies, so that light from the light sources enters the composite light incident module after passing through the light source support, and then enters each layer of light guide assemblies.

Preferably, the light source is a PCB lamp panel with LED beads.

Preferably, the composite light incident module comprises a light guide structure and a transition structure, and the layers of the light guide assemblies are connected to the transition structure; and wherein the light guide structure is composed of a plurality of tines, the tines protrude from the transition structure toward the light sources, and a tip of each of the tines corresponds to one LED bead, so that light is collected and introduced into each layer of the light guide assemblies located downstream.

Preferably, the tine has a proximal light source end and a distal light source end opposite to each other, and the thickness of the proximal light source end is greater than the thickness of the distal light source end.

A second aspect of the present invention provides a vehicle optical trim. The vehicle optical trim comprises a plurality of light sources and a plurality of layers of light guide assemblies stacked; each layer of the light guide assemblies corresponds to a corresponding light source and is adapted to receive light from the corresponding light source to form an independent display module; the vehicle optical trim is configured to illuminate only one display module to achieve a light effect of the single layer of the light guide assemblies; or at least two display modules are illuminated at the same time to achieve a light effect created by a superposition of the at least two light guide assemblies.

Preferably, each display module has its own dynamic lighting effect; the vehicle optical trim is adapted to be configured to simultaneously illuminate a plurality of display modules, so as to achieve a dynamic light effect created by a longitudinal superposition of the plurality of the display modules.

Preferably, the light guide assembly on one plane comprises a plurality of transverse modules independently controlled; each of the transverse modules has its own dynamic lighting effect; the vehicle optical trim is adapted to be configured to simultaneously illuminate the plurality of the transverse modules on the same plane to achieve a dynamic light effect created by a transverse superposition of the plurality of the transverse modules; or the vehicle optical trim is adapted to be configured to simultaneously illuminate the plurality of the transverse modules on the same plane and at the same time illuminate a plurality of display modules in different layers, so as to achieve a dynamic light effect created by a transverse superposition of the plurality of the transverse modules and a longitudinal superposition of the plurality of the display modules.

According to the vehicle optical trim of the present invention, a multi-dimensionally superposed dynamic effect of a surface light source is realized at a low cost by means of a longitudinal superposition of a plurality of layers of the light guide assemblies.

### FIGURES

- FIG. 1: is a schematic structural diagram of a vehicle equipped with a vehicle optical trim according to the present invention.
- FIG. 2: illustrates a part of the interior of the vehicle of FIG. 1.
- FIG. 3: illustrates another part of the interior of the vehicle of FIG. 1.
- FIG. 4: is a longitudinal structural schematic diagram of a vehicle optical trim according to a preferred embodiment of the present invention.
- FIG. 5: is an exploded view of FIG. 4.
- FIG. 6: is a schematic structural diagram of the light source support of FIG. 5.
- FIG. 7: is a schematic structural diagram of the light guide member of FIG. 5.
- FIG. 8: is a vertical top view of a light guide member according to another embodiment.
- FIG. 9: is a vertical top view of a light guide member according to yet another embodiment.
- FIG. 10: is a vertical top view of a light guide member according to yet another embodiment.
- FIG. 11: is a vertical top view of a light guide member according to yet another embodiment.
- FIG. 12: is a schematic structural diagram of the light isolation reflective layer of FIG. 5.
- FIG. 13: is an enlarged view of area A of FIG. 12 showing a side light isolation layer.
- FIG. 14: is a longitudinal structural schematic diagram of a vehicle optical trim according to another preferred embodiment of the present invention.
- FIG. 15: is an exploded view of FIG. 14.
- FIG. 16: is a 45 degree side view of the composite light incident module of FIG. 15.
- FIG. 17: is another 45 degree side view of the composite light incident module of FIG. 15.
- FIG. 18: is a top view of the composite light incident module of FIG. 15.
- FIG. 19: is a front view of the incident surface of the composite light incident module of FIG. 15.
- FIG. 20: is a side view of the composite light incident module of FIG. 15.
- FIG. 21: is a front view of the connection surface of the composite light incident module of FIG. 15 for connecting with a light guide assembly.

### DESCRIPTION

Preferred embodiments of the present invention are provided below with reference to the accompanying drawings, and are described in detail.

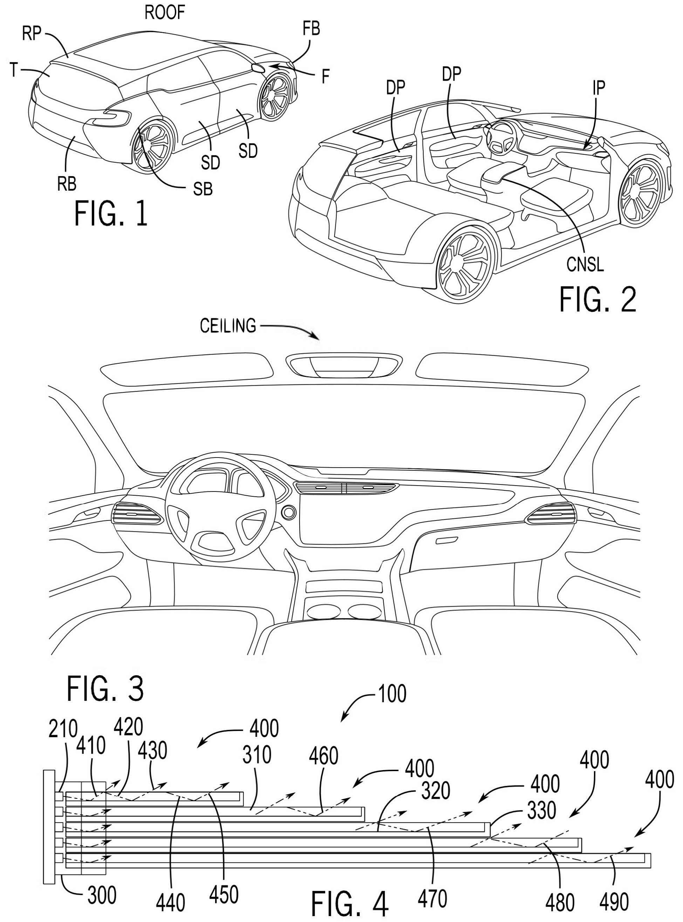

The vehicle optical trim according to the present disclosure may be installed outside the vehicle as shown in FIG. 1, for example, applied to the front bumper FB, the rear bumper RB, the roof Roof, the trim strip RP, the trim panel F, the tailgate T, the side door SD, or the side body SB, or may be installed inside the vehicle as shown in FIG. 2 to FIG. 3, for example, applied to the dashboard IP, the front and rear doors DP, and the ceiling Ceiling. The vehicle optical trim employs a multi-layer, multi-dimensional, composite superposition design, and realizes a multi-dimensionally combined dynamic effect of a surface light source at a low cost.

As shown in FIG. 4 to FIG. 5, a vehicle optical trim according to a preferred embodiment of the present disclosure comprises a plurality of light sources 210, a light source support 300, and a plurality of layers of light guide assemblies 400 longitudinally stacked, wherein the light sources 210 are side-lit, and light from the plurality of the light sources 210 enters the light guide assemblies 400 after passing through the light source support 300 for refraction. In this way, each layer of the light guide assemblies 400 forms a display module. Correspondingly, the plurality of the light guide assemblies 400 form a plurality of display modules. The light source corresponding to each layer of the light guide assemblies 400 may be independently controlled, so these display modules form independent display modules, and emergent light of the display modules is combined with each other to create different light emission effects at an upper light output surface 100.

The light guide assembly on one plane may comprise a plurality of transverse modules, which are independently controlled. In one embodiment, each light guide assembly is divided in a transverse direction into a plurality of regions, each region forming a transverse module. The light source corresponding to each region may be independently controlled such that the transverse modules may be independently controlled. In another embodiment, each light guide assembly may be formed by splicing a plurality of transverse modules, and the light source corresponding to each transverse module may be independently controlled, thereby realizing independent control of the transverse modules. For example, the vehicle optical trim is one meter in the transverse direction and can be divided into two transverse modules of 0.5 meters as needed. Each transverse module has its own dynamic lighting effect, and meanwhile, the transverse modules can be combined transversely and longitudinally in a linkage manner, so as to achieve a multi-dimensionally superposed dynamic effect, such as flame or tidal effects.

It should be understood that the light guide principles of the layers of the light guide assemblies are the same, and the number of layers of the light guide assemblies is one to myriad. Compared with the direct-lit light source in the prior art, the present invention can achieve richer dynamic effects in the case of limited light sources by combining the side-lit light sources and the stacked light guide members.

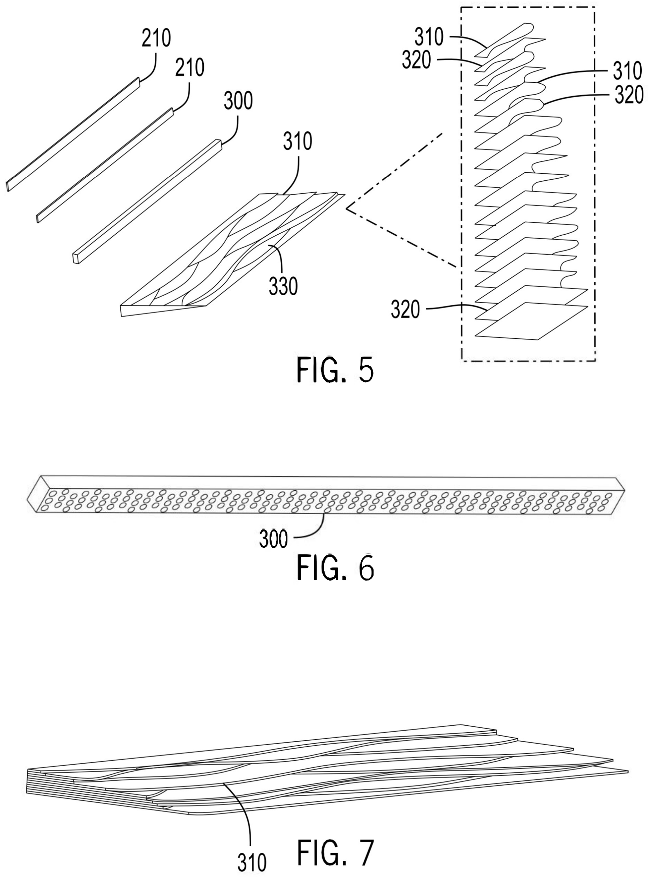

As shown in FIG. 4 and FIG. 5, each layer of the light guide assemblies comprises a light guide member 310, a light isolation reflective layer 320, and a side light isolation layer 330. The light isolation reflective layer 320 is located below the light guide member 310, and the side light isolation layer 330 is located on the outer edge of the light guide member 310. Light from the light source 210 enters the corresponding light guide member 310 and is refracted by the light guide member 310. Light is separated by the light isolation reflective layer 320 from the adjacent light guide assemblies 400. The light is transmitted independently in each layer of the light guide assemblies, for example, light is transmitted along the first light transmission path 410, the second light transmission path 420, the third light transmission path 430, the fourth light transmission path 440, the fifth light transmission path 450, the sixth light transmission path 460, the seventh light transmission path 470, the eighth light transmission path 480, and the ninth light transmission path 490, and at the same time, light effects of different layers are superimposed and combined, so that light reflected to the light output surface 100 presents a superposed effect of the different layers.

In this embodiment, the light source 210 is a PCB lamp panel with LED beads. Compared with the direct-lit light source in the prior art, the present invention can achieve richer dynamic effects by using fewer LED beads and combining the side-lit light sources with the stacked light guide members. Further, the present invention can omit the corresponding heat dissipation structure and reduce the cost. It should be understood that the light source 210 may also be a light guide bar, a light guide plate, a light homogenizing film, a light homogenizing plate, a light emitting thin film, or a light emitting optical fiber that can emit light when being illuminated by a light source.

As shown in FIG. 6, the light source support 300 is a light isolation member in a light incident section. The layers of the light sources are isolated by the light source support 300 and do not interfere with each other, so that a better layered control of the light sources in the longitudinal direction can be achieved. The layers of the light sources can also be isolated in the transverse direction as required. By combining the arrangement of the light sources in each layer, a transversely and longitudinally superposed dynamic effect can be achieved, and a composite superposition of different layers achieves a multi-dimensionally and multi-directionally superimposed dynamic effect of the surface light source. In a preferred embodiment, the light source support 300 is a rubber or plastic support. It should be understood that the light source support 300 may also be made of other light-isolating materials. In this embodiment, a plurality of light-transmitting holes in the light source support 300 are in one-to-one correspondence with the LED beads of the plurality of the light sources 210, and they may be arranged in a whole or staggered manner according to needs, so that the areas illuminated by the LED beads are divided by the light source support 300.

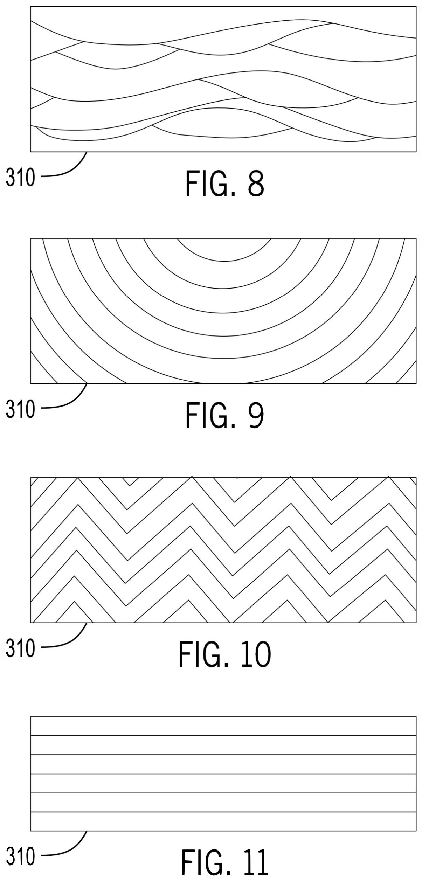

As shown in FIG. 7, the light guide member 310 comprises various light guide mediums such as a light guide plate, a light guide body, a diaphragm, a fiber light guide and the like. In a preferred embodiment, the bottom of the light guide member 310 is provided with dots used as reflective structures, or the bottom of the light guide member 310 is applied with a coating, a leather texture, a laser etching texture or a film. In a preferred embodiment, the light guide member 310 itself is a light guide material. That is, the light guide member 310 may be a medium provided with dots or other various light guide structure features and chemical coatings, or optical materials, etc. which can achieve light transmission. It should be understood that the light guide member 310 comprises, but is not limited to, the above manner of conducting light. The light guide members 310 are in a multi-layer stacked mode (the number of layers is N), and the shape of each layer of the light guide members 310 can be designed according to a light emission effect on the A surface, which is not limited to the wave shape of FIG. 7 corresponding to the tidal effect, and can be any other shape, such as the curve of FIG. 8, the arc of FIG. 9, the fold line of FIG. 10, the straight line of FIG. 11, or other specific patterns. It should be understood that each layer of the light guide members 310 cannot be completely blocked by the previous layer, and at the top view angle, at least part of the outer edge of the light guide members 310 in a lower layer extends beyond the light guide assembly in a previous layer.

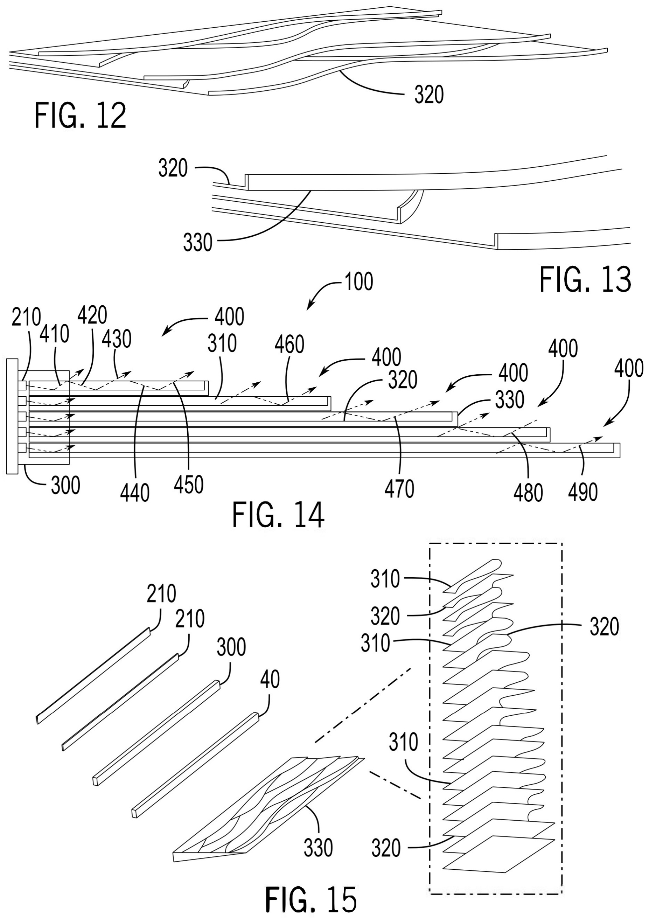

As shown in FIG. 12, the light isolation reflective layer 320 is an isolation layer on the bottom surface, which plays an isolation role, and also plays a role of reflection. Specifically, the light isolation reflective layer 320 may be in the form of a support, or may be in the form of a film, a coating, a printing coating and the like attached to the light guide member, so as to achieve the light isolation or reflection effect at a surface position of each layer.

As shown in FIG. 13, the side light isolation layer 330 is located on the outer side of the light guide member 310, that is, envelopes at the outermost side of the light guide member 310 to prevent the light from passing outward. Specifically, the side light isolation layer 330 may be in the form of a support, or may be in the form of a film, a coating, a printing coating and the like attached to the light guide member, which plays a light isolation role. In this embodiment, the height of the side light isolation layer 330 is substantially equal to the height of the light guide member 310. It should be understood that the height of the side light isolation layer 330 may also be slightly higher than the height of the light guide member 310. In this embodiment, the side light isolation layer 330 and the light isolation reflective layer 320 are two independent components. It should be understood that the side light isolation layer 330 and the light isolation reflective layer 320 may also be combined into one component.

In this embodiment, each layer of the light guide assemblies has a conventional thickness (1.5 mm or more). By illuminating the light source 210, light enters the light guide member 310, and the light effect of the single layer is achieved by means of the light isolation reflective layer 320 and the side light isolation layer 330. Each layer of the light guide assemblies displays light effect in the same manner. Further, a combination of different effects is achieved by superposition and combination of the layers of the light guide assemblies, and further a dynamic lighting effect of each layer may also be incorporated in a transverse direction. Further, different multi-dimensional dynamic effects can be achieved by free combinations of the transverse superposition and longitudinal superposition.

As shown in FIGS. 14-15, the vehicle optical trim according to another preferred embodiment of the present invention further comprises a composite light incident module 340 for use with a thinner light guide 310. The composite light incident module 340 is used to realize a cross arrangement for the plurality of the light sources 210 and play a role of matching the light sources 210 with the light guide members 310. The light of the light sources 210 enters the composite light incident module 340 after passing through the light source support 300, and the light guide members 310 of the light guide assemblies receive and refract the light to form independent display modules. Each layer of the transverse modules can also have its own dynamic lighting effect, and different layers can be superposed and combined with each other to create different light output effects at the light output surface 100. At the same time, the display modules may be combined transversely and longitudinally in a linkage manner, to achieve multi-dimensionally superposed dynamic effects. It should be understood that this embodiment is an ultra-thin system model, which is a supplementary model of the previous embodiment, and the light utilization rate of the entire system model is the highest while preventing light from crosstalking between different layers, thereby meeting the market demand for smaller space and ultra-thin effect.

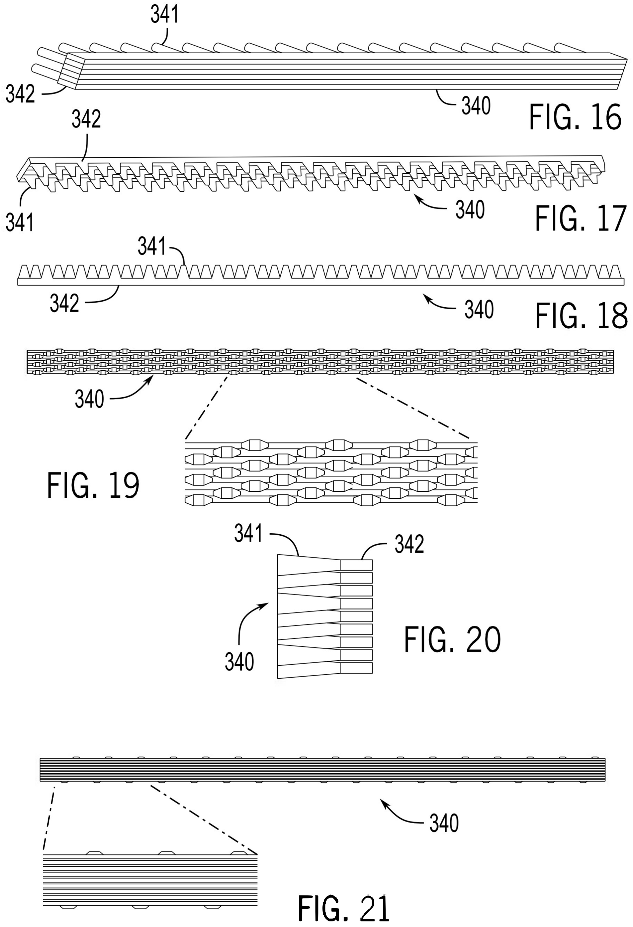

As shown in FIG. 16 to FIG. 21, the composite light incident module 340 comprises a light guide structure 341 and a transition structure 342, The light guide members 310 of the light guide assemblies are respectively connected to the transition structure 342 via a snap-fit connection. The light guide structure 341 is composed of a plurality of tines, the tines protrude from the transition structure 342 towards the light sources 210, and the tip of each tine corresponds to one LED bead, so as to collect the light into the downstream light guide member 310. Accordingly, the composite light incident module 340 of the present invention can be divided into a front segment and a rear segment. The light guide structure 341 of the front segment matches the cross arrangement of the light sources, and the transition structure 342 of the rear segment is connected with the light guide members 310, so as to receive more light from the light sources and reduce energy consumption of the light sources. In this embodiment, the tine has a proximal light source end and a distal light source end opposite to each other, and the thickness of the proximal light source end is greater than the thickness of the distal light source end.

In this embodiment, the thickness of each layer of the light guide assemblies is less than a conventional thickness (1.5 mm or less). By lighting the light sources 210, the light enters the light guide member 310 by means of the composite light incident module 340, and the light effect of the single layer is achieved by means of the light isolation reflective layer 320 and the side light isolation layer 330. Each layer of the light guide assemblies creates a light effect in the same manner. Further, a combination of different light effects is performed through a composite superposition of the layers of the light guide assemblies, and further a dynamic lighting effect from each layer may also be incorporated in a transverse direction. Further, free combinations of transverse superposition and longitudinal superposition can create multi-dimensional different dynamic effects.

The present application further provides a vehicle optical trim. The vehicle optical trim comprises a plurality of light sources 210 and a plurality of layers of light guide assemblies 400 stacked. Each layer of the light guide assemblies 400 corresponds to a respective light source 210 and receives light from the respective light source 210 to form an independent display module. The vehicle optical trim is configured to illuminate only one display module to achieve a light effect of a single layer of the light guide assemblies; or at least two display modules are illuminated at the same time to achieve a light effect created by a superposition of the at least two light guide assemblies.

In one embodiment, each display module has its own dynamic lighting effect. The vehicle optical trim is adapted to simultaneously illuminate a plurality of display modules to achieve a dynamic light effect created by a longitudinal superposition of the plurality of the display modules.

In one embodiment, the light guide assembly on one plane comprises a plurality of independently controlled transverse modules, and each of the transverse modules has its own dynamic lighting effect. The vehicle optical trim is adapted to be configured to simultaneously illuminate the plurality of the transverse modules on the same plane to achieve a dynamic light effect created by a transverse superposition of the plurality of the transverse modules; or the vehicle optical trim is adapted to be configured to simultaneously illuminate the plurality of the transverse modules on the same plane and at the same time illuminate a plurality of display modules in different layers to achieve a dynamic light effect created by a transverse superposition of the plurality of the transverse modules and a longitudinal superposition of the plurality of the display modules.

The embodiments are only preferred embodiments of the present disclosure and are not intended to limit the scope of the present disclosure, and various changes may also be made in the embodiments of the present disclosure. That is, any simple, equivalent change and modification made according to the claims and description of the present application fall within the protection scope of the claims of the present invention. The contents not described in detail in the present invention are conventional technical content.

## Claims

1. A vehicle optical trim comprising a plurality of light sources and a plurality of layers of light guide assemblies longitudinally stacked, wherein the light sources are side-lit, the light guide assemblies form independent display modules by receiving light from the plurality of the light sources that do not interfere with each other and refracting the light, and emergent light of the display modules is combined to create different light emission effects at an upper light output surface.

2. The vehicle optical trim of claim 1,
wherein each layer of the light guide assemblies comprises a light guide member and a light isolation reflective layer; wherein the light isolation reflective layer is located below the light guide member; and wherein light from the light sources enters the light guide members and is refracted by the light guide members, and light in the adjacent layers of the light guide assemblies is separated by means of the light isolation reflective layer, so that the light in each layer of the light guide assemblies is transmitted independently.

3. The vehicle optical trim of claim 2,
wherein an outer edge of the light guide member in a lower layer at least partially extends beyond the light guide assembly of a previous layer.

4. The vehicle optical trim of claim 2,
wherein the light guide member and the light isolation reflective layer are independent from each other, or the light isolation reflective layer is integrated on the light guide member.

5. The vehicle optical trim of claim 2,
wherein each layer of the light guide assemblies further comprises a side light isolation layer, and the side light isolation layer is located on an outer side of the light guide member.

6. The vehicle optical trim of claim 5,
wherein a height of the side light isolation layer is substantially equal to, or slightly greater than, a height of the light guide member.

7. The vehicle optical trim of claim 2,
wherein a reflective structure is provided at a bottom of each layer of the light guide members.

8. The vehicle optical trim of claim 1,
wherein the light guide assembly on one plane comprises a plurality of transverse modules independently controlled.

9. The vehicle optical trim of claim 1,
wherein the vehicle optical trim further comprises a light source support, and the light source support is adapted to separate light incident on each layer of the light guide assemblies.

10. The vehicle optical trim of claim 9,
wherein a plurality of light-transmitting holes is configured on the light source support, and each of the light-transmitting holes corresponds to a light source of each layer of the light guide assemblies.

11. The vehicle optical trim of claim 9,
wherein the vehicle optical trim further comprises a composite light incident module located between the light source support and the light guide assemblies, so that light from the light sources enters the composite light incident module after passing through the light source support, and then enters each layer of the light guide assemblies.

12. The vehicle optical trim of claim 11,
wherein the light source is a PCB lamp panel with LED beads.

13. The vehicle optical trim of claim 12,
wherein the composite light incident module comprises a light guide structure and a transition structure, and the layers of the light guide assemblies are connected to the transition structure; and wherein the light guide structure is composed of a plurality of tines, the tines protrude from the transition structure toward the light sources, and a tip of each of the tines corresponds to one LED bead, so that light is collected and introduced into each downstream layer of the light guide assemblies.

14. The vehicle optical trim of claim 13,
wherein the tine has a proximal light source end and a distal light source end opposite to each other, and a thickness of the proximal light source end is greater than a thickness of the distal light source end.

15. A vehicle optical trim, comprising:
- a plurality of light sources; and
- a plurality of layers of light guide assemblies stacked, wherein each layer of the light guide assemblies corresponds to a corresponding light source and is adapted to receive light from the corresponding light source to form an independent display module;
- the vehicle optical trim is configured to illuminate only one of the display modules to achieve a light effect of the single layer of the light guide assemblies; or at least two of the display modules are illuminated at the same time to achieve a light effect created by a superposition of the at least two light guide assemblies.

16. The vehicle optical trim of claim 15,
wherein each of the display modules has its own dynamic lighting effect; the vehicle optical trim is configured to simultaneously illuminate a plurality of display modules, so as to achieve a dynamic lighting effect created by a longitudinal superposition of the plurality of the display modules.

17. The vehicle optical trim of claim 15,
wherein the light guide assembly on one plane comprises a plurality of transverse modules independently controlled, and each of the transverse modules has its own dynamic lighting effect;
the vehicle optical trim is configured to simultaneously illuminate the plurality of the transverse modules on the same plane to achieve a dynamic lighting effect created by a transverse superposition of the plurality of the transverse modules; or
the vehicle optical trim is adapted to be configured to simultaneously illuminate the plurality of the transverse modules on the same plane and at the same time illuminate a plurality of display modules in different layers, so as to achieve a dynamic lighting effect created by a transverse superposition of the plurality of the transverse modules and a longitudinal superposition of the plurality of the display modules.
